# EUROPÄISCHE PATENTANMELDUNG

(11) **EP 3 685 945 A1**
(43) Veröffentlichungstag der Anmeldung: **29.07.2020**
(21) Anmeldenummer: 19216533.0
(22) Anmeldetag: 16.12.2019
(51) Int. Cl.: B23D 39/00, B25F 5/00, H02K 9/02

(54) **GEHÄUSE FÜR EINE ELEKTROWERKZEUGMASCHINE**

(30) Priorität: 19.12.2018 DE 102018132874
(71) Anmelder: C. & E. Fein GmbH, 73529 Schwäbisch Gmünd-Bargau (DE)
(72) Erfinder: Shondel, Aryon, Davenport, Iowa 52804 (US); Hess, Achim, 73529 Schwäbisch Gmünd-Bargau (DE); Gosnik, Ralf, 73054 Eislingen (DE); Richt, Boris, 71282 Hemmingen (DE); Denzel, Sergej, 73529 Schwäbisch Gmünd-Bargau (DE)
(74) Vertreter: Roos, Michael

(57) **Zusammenfassung**

Die Erfindung betrifft ein Gehäuse (1) für eine Elektrowerkzeugmaschine (2), insbesondere für eine Kernbohrmaschine (3), in dem ein eine Motorwelle (5) zum Antreiben einer Werkzeugaufnahme (6) aufweisender Motor (4) aufgenommen ist, dem Kühlluft durch mindestens einen einenends durch mindestens einen Lufteinlass (9) und anderenends durch mindestens einen Luftauslass 10 begrenzten Luftführungskanal (11) zugeführt wird. In dem Luftführungskanal (11) ist stromabwärts von dem mindestens einen Lufteinlass (9) eine eine Luftführung für die Kühlluft bereitstellende Führungsstruktur (12) angeordnet, der eine Motoraufnahme (14) zugeordnet ist, in der der Motor (4) zumindest teilweise aufgenommen ist.

## Beschreibung

Die Erfindung betrifft ein Gehäuse für eine Elektrowerkzeugmaschine, insbesondere für eine Kernbohrmaschine, in dem ein eine Motorwelle zum Antreiben einer Werkzeugaufnahme aufweisender Motor aufgenommen ist, dem Kühlluft durch mindestens einen einenends durch mindestens einen Lufteinlass und anderenends durch mindestens einen Luftauslass begrenzten Luftführungskanal zugeführt wird.

Bei Elektrowerkzeugmaschinen und insbesondere bei Kernbohrmaschinen tritt häufig das Problem auf, dass mit zunehmender Leistung der in den Elektrowerkzeugmaschinen verbauten Motoren die Wärmeentwicklung stark ansteigt, was dann dazu führt, dass die vorhandene Kühlleistung nicht ausreicht, um diese im Betrieb entstehende Wärme effektiv abzuführen. Um dieses Problem zu beheben, ist es daher üblich, die Kühlleistung zu erhöhen, indem beispielsweise verbesserte Lüfter oder gar zusätzliche Lüfter eingebaut werden. Von der Bezeichnung Kernbohrmaschinen sind insbesondere auch Magnetkernbohrmaschinen erfasst, die einen Magnetfuß umfassen, mit denen die Elektrowerkzeugmaschinen an dem zu bearbeitenden Werkstück über eine Magnetkraft gehalten werden kann.

Dies birgt aber die Problematik, dass sich die Optimierung der Lüfter als sehr aufwändig gezeigt hat und die Verwendung zusätzlicher Lüfter mit erhöhten Kosten und einem erhöhten Platzbedarf verbunden ist, wodurch insbesondere die Kosten ansteigen und die entsprechenden Elektrowerkzeugmaschinen nicht länger kompakt gebaut werden können.

Der vorliegenden Erfindung liegt daher die Aufgabe zugrunde, die vorgenannten Nachteile zu reduzieren und ein Gehäuse für eine Elektrowerkzeugmaschine bereitzustellen, die eine vereinfachte Wärmeabfuhr ermöglicht.

Diese Aufgabe wird gemäß der Erfindung bei einem Gehäuse der eingangs genannten Art dadurch gelöst, dass in dem Luftführungskanal stromabwärts von dem mindestens einen Lufteinlass eine eine Luftführung für die Kühlluft bereitstellende Führungsstruktur angeordnet ist, der eine Motoraufnahme zugeordnet ist, in der der Motor zumindest teilweise aufgenommen ist.

Die Führungsstruktur dient hierbei letztlich dazu, die durch den Lufteinlass einströmende Kühlluft gezielt dem Motor zuzuführen. Insbesondere durch die Motoraufnahme wird dabei eine Führung bereitgestellt, durch die die Kühlluft strömen kann und gezielt den besonders kühlungsbedürftigen Teilen des Motors zugeleitet werden kann. Durch diese Merkmale lässt sich die Temperatur des Motors deutlich um bis zu 30 K reduzieren, wodurch die Betriebssicherheit der Maschine verbessert wird und deutlich reduzierte Ausfallraten erreicht werden können. Durch die Verwendung der Führungsstruktur, die eine Motoraufnahme aufweist, lässt sich zudem auch erreichen, dass Motoren unterschiedlicher Größe in lediglich einem Gehäuse verwendet werden können. Es müssen allenfalls die Führungsstruktur an die verwendeten Motoren angepasst werden. Durch das dadurch erreichbare universell einsetzbare Gehäuse lassen sich insbesondere die Kosten deutlich reduzieren.

In diesem Zusammenhang hat es sich auch besonders bewährt, wenn die Motoraufnahme im Bereich des Kommutators des Motors angeordnet ist, da hier besonders viel Wärme entsteht, die dann wieder abgeführt werden muss. Durch die im Bereich des Kommutators angeordnete Motoraufnahme der Führungsstrukturen wird damit letztlich erreicht, dass kühlungsintensiven Bereichen gezielt Kühlluft zugeführt werden kann, wodurch es möglich ist, lokal auftretende Wärme gezielt abzuführen.

Als günstig hat es sich auch gezeigt, wenn die Führungsstruktur einen plattenförmigen Grundkörper umfasst und wenn sich die Motoraufnahme im Wesentlichen senkrecht zu dem Grundkörper erstreckt. Durch den Grundkörper und die senkrecht dazu angeordnete Motoraufnahme lässt sich insbesondere der Luftstrom, der von dem Lufteinlass kommt, besonders gut kanalisieren. Hierbei hat es sich besonders bewährt, wenn der plattenförmige Grundkörper in Strömungsrichtung von dem mindestens einen Lufteinlass axial beabstandet ist. Hierdurch wird sichergestellt, dass die Kühlluft, die über den mindestens einen Lufteinlass in das Gehäuse strömt, von dem plattenförmigen Grundkörper besonders einfach zu dem Motor geleitet werden kann. Im Rahmen der Erfindung ist es aber explizit auch vorgesehen, dass - insbesondere wenn mehrere Lufteinlässe vorhanden sind - ein Teil der Lufteinlässe jeweils bezogen auf die Längsachse der Motorwelle oberhalb des plattenförmigen Grundkörpers und ein Teil unterhalb des plattenförmigen Grundkörpers angeordnet sind.

Bewährt hat es sich weiterhin auch, wenn die Motoraufnahme auf der der Werkzeugaufnahme abgewandten Seite der Führungsstruktur angeordnet ist. Hierdurch wird die Strömungsrichtung der Kühlluft, die über den mindestens einen Lufteinlass in das Gehäuse geleitet wird, zumindest teilweise umgekehrt, so dass eventuell in dem einströmenden Luftstrom enthaltene Partikel nicht in dem Kühlluftstrom enthalten sind, der dem Motor zugeführt wird, sondern aus diesem herausgefiltert werden, wodurch sich die Lebensdauer des Motors zusätzlich verbessern lässt.

Als günstig hat es sich auch erwiesen, wenn zwischen der Motoraufnahme und dem von der Motoraufnahme umgebenden Teil des Motors ein Spalt gebildet ist, der eine Breite aufweist, die zwischen 10 % und 30 % und besonders bevorzugt zwischen 15 % und 20 % des Durchmessers der Motorwelle liegt. Hierdurch wird letztlich in Abhängigkeit von der Motorgröße die Kanalisierung der Kühlluft vorgegeben und damit die Strömungsgeschwindigkeit erhöht, was sich letztlich positiv auf die Kühlleistung auswirkt.

In diesem Zusammenhang hat es sich auch als besonders vorteilhaft gezeigt, wenn der Spalt zumindest abschnittsweise eine ringförmige Gestalt aufweist. Hierdurch kann der Spalt an die äußere Form des Motors angepasst werden.

Als vorteilhaft hat es sich auch erwiesen, wenn in dem Gehäuse mindestens eine Steckaufnahme ausgebildet ist zur lösbaren Aufnahme der Führungsstruktur. Wenn nun ein Motor mit anderen Abmessungen verwendet werden soll, so ist es hierdurch möglich, lediglich die Führungsstruktur auszutauschen, ohne das Gehäuse wechseln zu müssen.

Um die Montage zu erleichtern hat es sich auch als vorteilhaft gezeigt, wenn das Gehäuse mehrteilig gebildet ist und ein erstes Gehäuseteil und ein zweites Gehäuseteil umfasst, die durch eine Steckverbindung lösbar miteinander verbindbar sind. Die Montage wird auch dadurch weiter vereinfacht, wenn die Führungsstruktur mehrteilig gebildet ist. So kann die Führungsstruktur besonders einfach in dem Gehäuse montiert werden.

Als günstig hat es sich weiterhin auch erwiesen, wenn in der Führungsstruktur Durchführungen ausgebildet sind. Hierdurch ist es möglich, die Anschlusskabel von dem Motor aus dem Gehäuse herauszuführen. Insbesondere bei Kernbohrmaschinen ist es dabei üblicherweise der Fall, dass die Steuerelektronik des Motors von diesem räumlich getrennt in einem separaten Elektronikgehäuse untergebracht ist. In diesem Fall werden die Anschlusskabel dann aus dem Gehäuse zu dem Elektronikgehäuse geführt und werden dort mit der Elektronik kontaktiert.

In diesem Zusammenhang hat es sich auch bewährt, wenn die Durchführungen zumindest teilweise durch Abdeckungen überdeckt sind. Die Abdeckungen können dabei beispielsweise als kreuzgeschlitzte Gummimembranen gebildet werden, wodurch erreicht wird, dass die Anschlusskabel herausgeführt werden können und gleichzeitig möglichst viel der einströmenden Luft als Kühlluft dem Motor zugeführt wird.

Weiterhin hat es sich als günstig erwiesen, wenn ein Führungseinsatz vorgesehen ist, dessen Längsachse im Wesentlichen parallel zu der Motorwelle des Motors orientiert ist. Dieser Führungseinsatz, der als separates Bauteil ausgebildet ist, kann insbesondere dann im Gehäuse angeordnet werden, wenn der Motor eine Elektronik aufweist, die in dem separaten Elektronikgehäuse untergebracht ist und gerade nicht in dem Gehäuse, in dem der Motor aufgenommen ist. In diesem Zusammenhang hat es sich als besonders vorteilhaft erwiesen, wenn der Führungseinsatz unmittelbar benachbart zu dem Motor angeordnet ist. Hierdurch lässt sich die Temperatur des Motors weiter signifikant um bis zu 10 K reduzieren. Bei Maschinen, bei denen die Elektronik im Gehäuse angeordnet ist, kann dann selbstredend auf den Führungseinsatz verzichtet werden und an dessen Stelle die Elektronik eingesetzt werden.

Bewährt hat es sich zudem auch, wenn die Außenkontur der Führungsstruktur an die Innenkontur des Gehäuses angepasst ist. Hierdurch ist die Führungsstruktur faktisch gegenüber dem Gehäuse abgedichtet und die Strömung der Kühlluft wird letztlich gezwungen, zwischen der Motoraufnahme und dem Motor vorbeizuströmen, wodurch die Kühlleistung weiter verbessert wird.

Im Folgenden wird die Erfindung an einem in den Zeichnungen dargestellten Ausführungsbeispiel näher erläutert; es zeigen:
- Fig. 1: eine Seitenansicht einer Elektrowerkzeugmaschine,
- Fig. 2: eine Schnittansicht entlang des Schnittes II-II aus der Figur 1,
- Fig. 3: eine perspektivische Explosionsansicht des Gehäuses mit eingesetzter Führungsstruktur,
- Fig. 4: eine perspektivische Ansicht der Führungsstruktur, und
- Fig. 5: eine perspektivische Ansicht eines Führungseinsatzes.

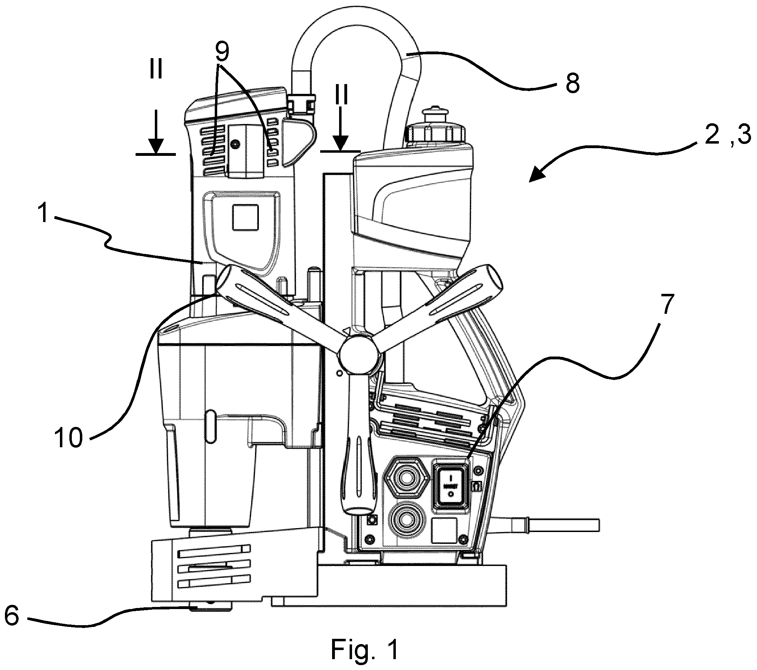

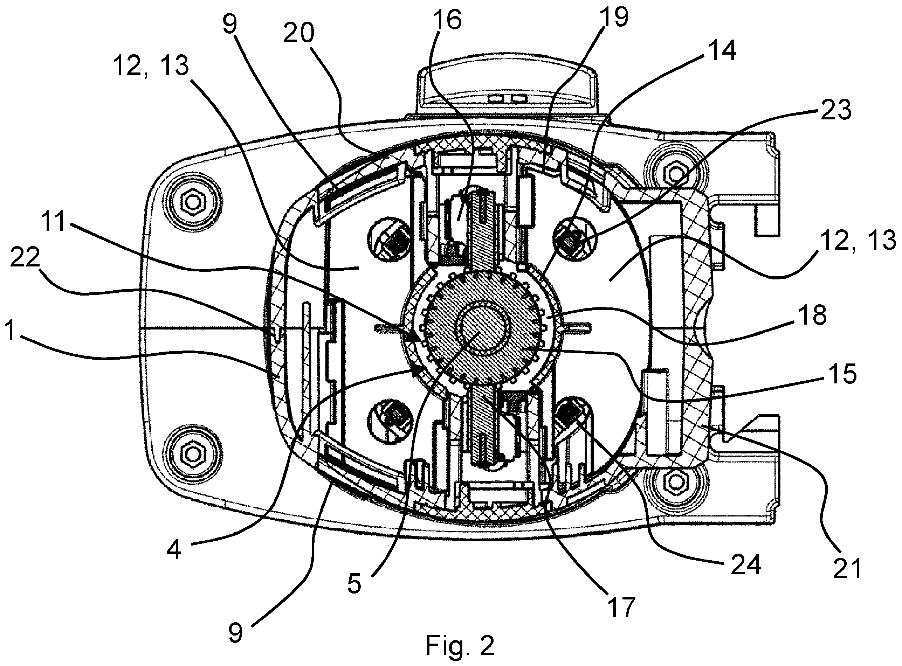

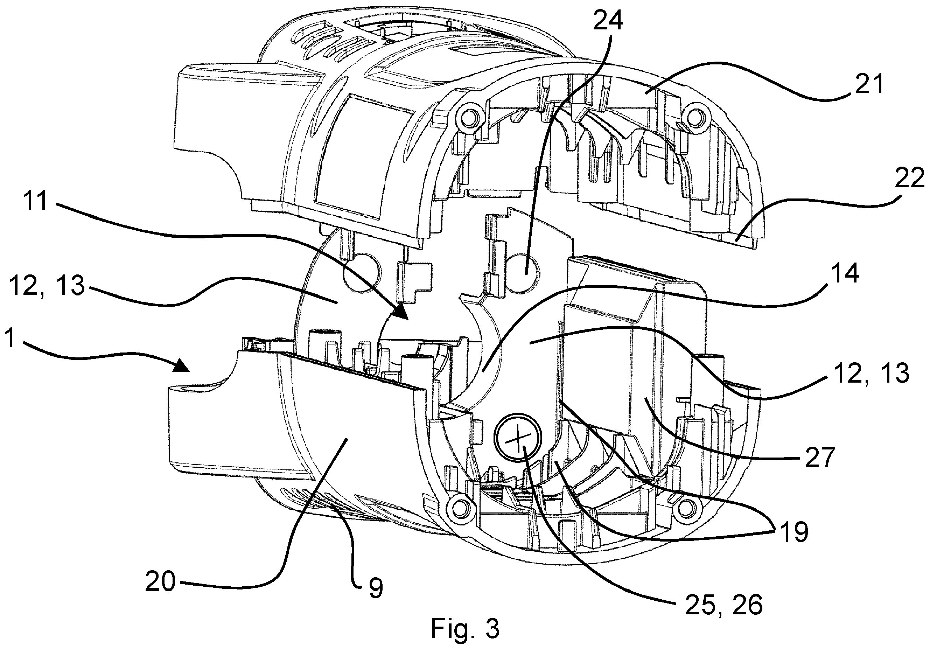

Figur 1 zeigt in einer Seitenansicht eine ein Gehäuse 1 aufweisende Elektrowerkzeugmaschine 2, die in dem gezeigten Ausführungsbeispiel als eine Kernbohrmaschine 3 ausgebildet ist. In dem Gehäuse 1 der Kernbohrmaschine 3 ist ein Motor 4 aufgenommen, der über eine Motorwelle 5 eine Werkzeugaufnahme 6 mit einem darin aufgenommenen Bohrwerkzeug antreibt. Die Kernbohrmaschine 3, die in der Figur 1 dargestellt ist, weist neben dem Gehäuse 1, in dem der Motor 4 aufgenommen ist, noch ein Elektronikgehäuse 7 auf, in dem die Elektronik aufgenommen ist, mit der der Motor 4 angesteuert wird. Über ein zwischen dem Gehäuse 1 und dem Elektronikgehäuse 7 angeordnetes Verbindungskabel 8 ist der Motor 4 mit der Elektronik verbunden. In dem Gehäuse 1 sind Lufteinlässe 9 und Luftauslässe 10 ausgebildet, die einen Luftführungskanal 11 begrenzen, durch den dem Motor 4 Kühlluft zugeführt wird, wie insbesondere anhand der nachstehend diskutierten Figuren 2 und 3 noch deutlicher werden wird.

Figur 2 zeigt in einer Schnittansicht entlang des Schnittes II - II aus der Figur 1 das Innere des Gehäuses 1. Hieraus ist insbesondere zu erkennen, dass in dem Gehäuse 1 eine Führungsstruktur 12 angeordnet ist, die in dem gezeigten Ausführungsbeispiel mehrteilig gebildet ist und letztlich zwei Hälften umfasst. Dabei ist die Außenkontur der Führungsstruktur 12 an die Innenkontur des Gehäuses 1 angepasst, um ein Abdichten gegenüber dem Gehäuse 1 zu erreichen. Die beiden Teile der Führungsstruktur 12 weisen dabei jeweils einen plattenförmigen Grundkörper 13 auf, der in Strömungsrichtung von dem mindestens einen Lufteinlass 9 axial beabstandet ist. Weiterhin umfasst Führungsstruktur 12 eine Motoraufnahme 14, die sich im Wesentlichen senkrecht zu dem Grundkörper 13 erstreckt. Durch die Motoraufnahme 14 wird die durch die Lufteinlässe 9 einströmende Luft zunächst umgelenkt, so dass in der Kühlluft eventuell enthaltene Verunreinigungen wie Späne oder sonstige bei der Bearbeitung von Werkstücken entstehende Verunreinigungen erst gar nicht in den Luftführungskanal 11 eingeleitet und damit auch nicht dem Motor 4 zugeführt werden. Durch den Umstand, dass der Luftstrom zunächst umgelenkt wird, wird also die Gefahr von Beschädigungen am Motor 4 deutlich reduziert. In dem gezeigten Ausführungsbeispiel ist die Motoraufnahme 14 im Bereich eines Kommutators 15 des Motors 4 angeordnet, der an dem der Werkzeugaufnahme 6 abgewandten Ende des Motors 4 angeordnet ist. Durch die Zweiteiligkeit der Führungsstruktur 12 ist in dem Gehäuse 1 auch genug Bauraum vorhanden, um die Bürstenhalter 16 mit den Kohlebürsten 17 darin aufzunehmen. Die Motoraufnahme 14 ist dabei auf der der Werkzeugaufnahme 6 abgewandten Seite der Führungsstruktur 12 angeordnet. Zwischen der Motoraufnahme 14 und dem von der Motoraufnahme 14 umgebenen Teil des Motors 4 ist ein Spalt 18 gebildet, der eine Breite aufweist, die in dem gezeigten Ausführungsbeispiel zwischen 15 % und 20 % des Durchmessers der Motorwelle 5 liegt. Die Motoraufnahme 14 weist einen ringsegmentartigen Querschnitt auf, wie der Figur 2 entnommen werden kann. Da der Kommutator 15 ebenfalls einen im Wesentlichen runden Querschnitt aufweist, weist aber auch der Spalt 18 - zumindest abschnittsweise - eine ringsegmentartige Gestalt auf. In dem Gehäuse 1 ist mindestens eine Steckaufnahme 19 ausgebildet zur lösbaren Aufnahme der Führungsstruktur 12. Hierdurch kann die Führungsstruktur 12 einfach in das Gehäuse 1 eingesetzt werden, wodurch man in der Lage ist, die Führungsstruktur 12 an die Anforderungen und äußeren Dimensionen des verwendeten Motors 4 anzupassen.

Wie insbesondere der Figur 3 entnommen werden kann, die eine reduzierte Explosionsdarstellung des Gehäuses 1 zeigt, ist das Gehäuse 1 mehrteilig gebildet und umfasst ein erstes Gehäuseteil 20 und ein zweites Gehäuseteil 21, die durch eine Steckverbindung 22 lösbar miteinander verbindbar sind. Dies hat insbesondere für die Montage Vorteile, da es nun möglich ist, die Führungsstruktur 12 zunächst in die Steckaufnahme 19 des ersten - bzw. zweiten - Gehäuseteils 20 einzusetzen, dann zusätzlich den Motor 4 in dem ersten Gehäuseteil 20 zu montieren und dann den zweiten Gehäuseteil 21 mit der Steckverbindung 22 daran zu befestigen. Um die Anschlusskabel 23 von dem Motor 4 zu der außerhalb des Gehäuses 1 in dem Elektronikgehäuse 7 befindlichen Elektronik zu führen, sind in der Führungsstruktur 12 Durchführungen 24 ausgebildet, durch die Anschlusskabel 23 geführt werden können. In der Zeichnung lediglich exemplarisch für eine der Durchführungen 24 angedeutet, werden dabei geschlitzte Gummimanschetten 25 verwendet, die als Abdeckungen 26 dienen, um die Durchführungen 24 zumindest teilweise zu überdecken, wodurch die Abdichtung der Durchführungen 24 verbessert wird und die Kühlluft letztlich im Wesentlichen ausschließlich in den Spalt 18 zwischen der Motoraufnahme 14 und dem Kommutator 15 gezogen wird und nicht durch die in der Führungsstruktur 12 ausgebildeten Durchführungen 24 strömen können, was sich negativ auf die Kühlleistung auswirken würde.

In dem Gehäuse 1 ist weiterhin ein Führungseinsatz 27 angeordnet, dessen Längsachse 28 im Wesentlichen parallel zu der Motorwelle 5 des Motors 4 orientiert ist und der letztlich als Ersatz - und damit als Platzhalter - für eine in dem gezeigten Ausführungsbeispiel nicht unmittelbar am Motor 4 benötigte Elektronik dient, um den Kanal zwischen dem Motor 4 weiter abzudichten. Sollte es bei dem verwendeten Motor 4 hingegen notwendig sein, die Elektronik unmittelbar benachbart zu dem Motor 4 anzubringen, so kann diese anstelle des Führungseinsatzes 27 in das Gehäuse 1 eingesetzt werden.

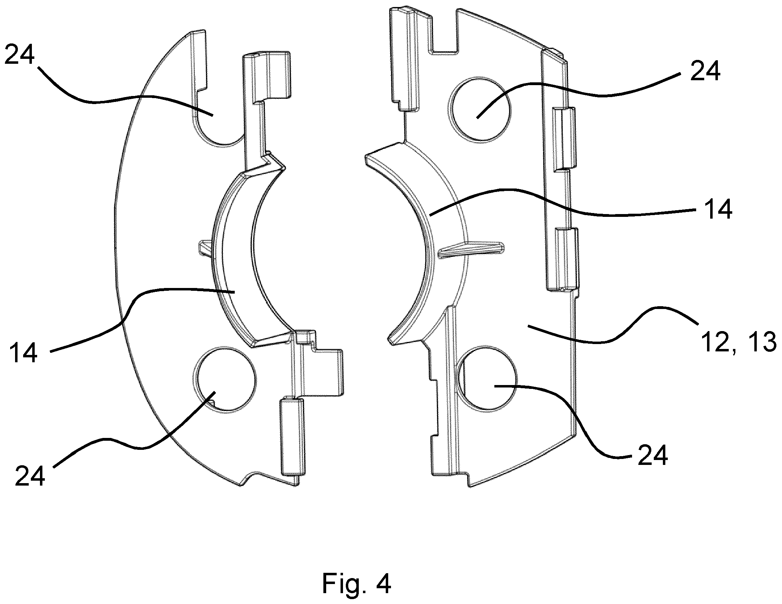

Figur 4 zeigt in einer perspektivischen Ansicht die Führungsstruktur 12, die in dem gezeigten Ausführungsbeispiel mehrteilig ausgebildet ist, um die von dem Lufteinlass 9 in das Gehäuse 1 strömende Kühlluft zu dem Motor 4 zu führen. Durch die Motoraufnahme 14 wird dabei insbesondere gewährleistet, dass auch die Teile des Motors 4, die an dem der Werkzeugaufnahme 6 abgewandten Ende der Motorwelle 5 angeordnet sind, mit dem Lufteinlass 9 vereinfacht gekühlt werden können, da zumindest ein Großteil der Kühlluft nunmehr durch den Spalt 18 zwischen der Motoraufnahme 14 und dem Kommutator 15 zu dem Motor 4 geführt wird.

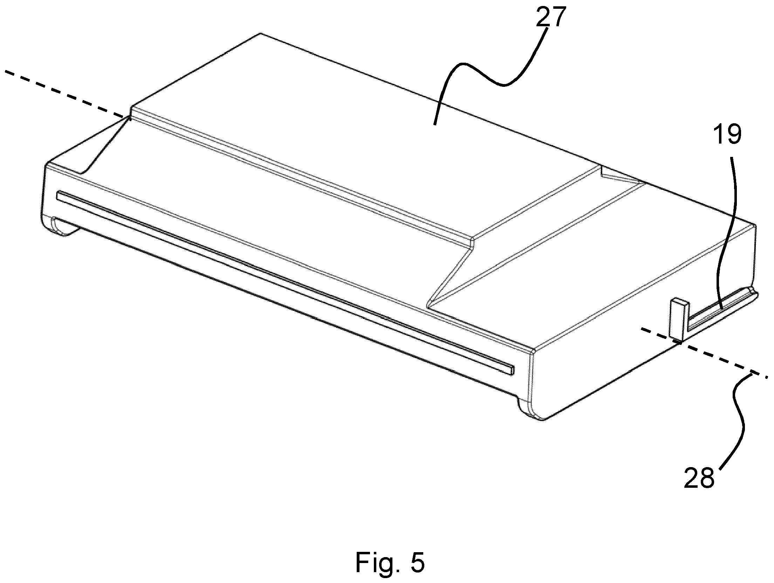

Figur 5 zeigt den Führungseinsatz 27, der im Wesentlichen der Kontur einer Elektronik nachempfunden ist und bei Bedarf gegen eine solche ausgetauscht werden kann, wenn ein Motor 4 verwendet werden soll, bei dem die Elektronik an dieser Stelle angebracht werden soll.

### Bezugszeichenliste

- 1: Gehäuse
- 2: Elektrowerkzeugmaschine
- 3: Kernbohrmaschine
- 4: Motor
- 5: Motorwelle
- 6: Werkzeugaufnahme
- 7: Elektronikgehäuse
- 8: Verbindungskabel
- 9: Lufteinlass
- 10: Luftauslass
- 11: Luftführungskanal
- 12: Führungsstruktur
- 13: Grundkörper
- 14: Motoraufnahme
- 15: Kommutator
- 16: Bürstenhalter
- 17: Kohlebürste
- 18: Spalt
- 19: Steckaufnahme
- 20: erstes Gehäuseteil
- 21: zweites Gehäuseteil
- 22: Steckverbindung
- 23: Anschlusskabel
- 24: Durchführung
- 25: Gummimanschette
- 26: Abdeckung
- 27: Führungseinsatz
- 28: Längsachse

## Patentansprüche

1. Gehäuse (1) für eine Elektrowerkzeugmaschine (2), insbesondere für eine Kernbohrmaschine (3), in dem ein eine Motorwelle (5) zum Antreiben einer Werkzeugaufnahme (6) aufweisender Motor (4) aufgenommen ist, dem Kühlluft durch mindestens einen einenends durch mindestens einen Lufteinlass (9) und anderenends durch mindestens einen Luftauslass 10 begrenzten Luftführungskanal (11) zugeführt wird, **dadurch gekennzeichnet, dass** in dem Luftführungskanal (11) stromabwärts von dem mindestens einen Lufteinlass (9) eine eine Luftführung für die Kühlluft bereitstellende Führungsstruktur (12) angeordnet ist, der eine Motoraufnahme (14) zugeordnet ist, in der der Motor (4) zumindest teilweise aufgenommen ist.

2. Gehäuse (1) nach Anspruch 1, **dadurch gekennzeichnet, dass** die Motoraufnahme (14) im Bereich des Kommutators (15) des Motors (4) angeordnet ist.

3. Gehäuse (1) nach Anspruch 1 oder 2, **dadurch gekennzeichnet, dass** die Führungsstruktur (12) einen plattenförmigen Grundkörper (13) umfasst und dass sich die Motoraufnahme (14) im Wesentlichen senkrecht zu dem Grundkörper (13) erstreckt.

4. Gehäuse (1) nach Anspruch 3, **dadurch gekennzeichnet, dass** der plattenförmige Grundkörper (13) in Strömungsrichtung von dem mindestens einen Lufteinlass (9) axial beabstandet ist.

5. Gehäuse (1) nach einem der Ansprüche 1 bis 4, **dadurch gekennzeichnet, dass** die Motoraufnahme (14) auf der der Werkzeugaufnahme (6) abgewandten Seite der Führungsstruktur (12) angeordnet ist.

6. Gehäuse (1) nach einem der Ansprüche 1 bis 5, **dadurch gekennzeichnet, dass** zwischen der Motoraufnahme (14) und dem von der Motoraufnahme (14) umgebenden Teil des Motors (4) ein Spalt (18) gebildet ist, der eine Breite aufweist, die zwischen 10 % und 30 % und besonders bevorzugt zwischen 15 % und 20 % des Durchmessers der Motorwelle (5) liegt.

7. Gehäuse (1) nach Anspruch 6, **dadurch gekennzeichnet, dass** der Spalt (18) zumindest abschnittsweise eine ringförmige Gestalt aufweist.

8. Gehäuse (1) nach einem der Ansprüche 1 bis 7, **dadurch gekennzeichnet, dass** in dem Gehäuse (1) mindestens eine Steckaufnahme (19) ausgebildet ist zur lösbaren Aufnahme der Führungsstruktur (12).

9. Gehäuse (1) nach einem der Ansprüche 1 bis 7, **dadurch gekennzeichnet, dass** das Gehäuse (1) mehrteilig gebildet ist und ein erstes Gehäuseteil (20) und ein zweites Gehäuseteil (21) umfasst, die durch eine Steckverbindung (22) lösbar miteinander verbindbar sind.

10. Gehäuse (1) nach einem der Ansprüche 1 bis 9, **dadurch gekennzeichnet, dass** die Führungsstruktur (12) mehrteilig gebildet ist.

11. Gehäuse (1) nach einem der Ansprüche 1 bis 10, **dadurch gekennzeichnet, dass** in der Führungsstruktur (12) Durchführungen (24) ausgebildet sind.

12. Gehäuse (1) nach einem der Ansprüche 1 bis 11, **dadurch gekennzeichnet, dass** die Durchführungen (24) zumindest teilweise durch Abdeckungen (26) überdeckt sind.

13. Gehäuse (1) nach einem der Ansprüche 1 bis 12 **dadurch gekennzeichnet, dass** ein Führungseinsatz (27) vorgesehen ist, dessen Längsachse (28) im Wesentlichen parallel zu der Motorwelle (5) des Motors (4) orientiert ist.

14. Gehäuse (1) nach Anspruch 13, **dadurch gekennzeichnet, dass** der Führungseinsatz (27) unmittelbar benachbart zu dem Motor (4) angeordnet ist.

15. Gehäuse (1) nach einem der Ansprüche 1 bis 14, **dadurch gekennzeichnet, dass** die Außenkontur der Führungsstruktur (12) an die Innenkontur des Gehäuses (1) angepasst ist.
